Europäisches Patentamt

(19) European Patent Office

Office européen des brevets

(11) Publication number: **0 354 612 B1**

(12) **EUROPEAN PATENT SPECIFICATION**

(45) Date of publication of patent specification:
27.12.91 Bulletin 91/52

(51) Int. Cl.⁵: **B01J 23/74, B01J 37/03**

(21) Application number: 89201986.0

(22) Date of filing: 28.07.89

(54) **Process for the preparation of nickel/alumina catalysts.**

(30) Priority: 10.08.88 EP 88201715

(43) Date of publication of application:
14.02.90 Bulletin 90/07

(45) Publication of the grant of the patent:
27.12.91 Bulletin 91/52

(84) Designated Contracting States:
AT BE CH DE ES FR GB GR IT LI NL SE

(56) References cited:
EP-A- 0 114 704
EP-A- 0 168 091
FR-A- 2 196 193
FR-A- 2 218 938
US-A- 4 064 152

(73) Proprietor: UNILEVER NV
Burgemeester s'Jacobplein 1 P.O. Box 760
NL-3000 DK Rotterdam (NL)
(84) Designated Contracting States:
BE CH DE ES FR GR IT LI NL SE AT
Proprietor: UNILEVER PLC
Unilever House Blackfriars P.O. Box 68
London EC4P 4BQ (GB)
(84) Designated Contracting States:
GB

(72) Inventor: Lok, Cornelis Martinus
Prunuslaan 14
NL-3235 VI Rockanje (NL)
Inventor: Oudejans, Johannes Cornelis
Michiel de Ruyterstraat 61
NL-6904 AS Zevenaar (NL)
Inventor: Ritter, Heike
Bredenbachstrasse 7
W-4240 Emmerich (DE)

(74) Representative: Gambell, Derek et al
UNILEVER PLC Patents Division P.O. Box 68
Unilever House
London EC4P 4BQ (GB)

## Description

The invention relates to a process for the preparation of nickel/alumina catalysts which optionally contain a promotor metal, to catalysts obtainable by this process and to a hydrogenation process using such a catalyst. More in particular the invention relates to a catalyst suitable for the hydrogenation of unsaturated organic compounds, especially fatty acid derivatives.

Nickel/alumina catalysts which optionally contain another metal are known in the prior art and mostly they are obtained by coprecipitation methods in which the nickel and aluminum are precipitated simultaneously from a nickel salt/aluminum compound solution by means of an alkaline precipitating agent.

Reference is made in particular to Kinetika i Kataliz, Vol 15, No 2, pp 488-496 of which a cover-to-cover translation is available as Kinetics and Catalysis, Vol 15, No 2, pp 425-432 (1974) and to Prof. Dr. L.L. van, Reyen and co-workers in Applied Catalysis, Vol 7, (1983) pp 85-90 as well as to Prof. van Reyens valedictory lecture from Delft Technical University in which it was mentioned that nickel/alumina compositions prepared by co-precipitation showed a cauliflower or sponge-like structure with a high porosity and would therefore be an excellent catalyst material. However, it was noted that the preparation on an industrial scale in tonnage quantities per day still gave rise to many problems. (Cf Summary in "De ingenieur" of April 1985, page 59). Another method for the preparation of this type of catalysts is disclosed in EP-A- 0168091 (Unilever), which method involves precipitation of an insoluble nickel compound from an aqueous solution of a nickel salt by an excess of an alkaline precipitating agent preferably in a vigorously agitated reactor, addition of a soluble aluminum compound in an ageing reactor where the mixture is agitated and aged before being collected, dried and reduced.

These methods suffer from one or more of the following disadvantages :

1. The structure of the catalyst (precursor) is not quite reproducible and differences as to porosity occur.
2. The filtration of the catalyst precursor (green cake) may give rise to problems.
3. The catalyst obtained shows a lower activity in the hydrogenation of oils and fats.

The present invention provides a process for preparing a nickel/alumina catalyst in which an insoluble nickel compound is first precipitated from an aqueous solution of a nickel salt with an excess alkaline precipitating agent, which first precipitate is subsequently reacted with a soluble aluminum compound in a vigorously agitated reactor using an energy input of 5 to 2000, preferably 10 to 100 Watts per litre of liquid and the so obtained second precipitate is then, optionally matured, collected, dried and reduced.

In a preferred embodiment of the process the temperature during the reaction of the first precipitate with the aluminum compound is between 10 and 100, preferably between 20 and 80°C. More in particular the temperature in the first precipitation reactor is then 0 to 30, preferably 5 to 25 centigrades different, from that in the second precipitation vessel. Also it is desirable that the energy input in the first precipitation reactor is between 5 and 2000, preferably between 10 and 100 Watts per litre.

Also it is preferred that the reaction of the first precipitate with the soluble aluminum compound takes place within 15 minutes after precipitation of the nickel ions and that a separate maturing step starts within 15 minutes after reaction with the aluminum compound.

For good results it is recommended that the soluble aluminum compound is added in an amount of 0.1 to 0.5, preferably between 0.1 and 0.25 mole aluminum per mole of nickel.

Furthermore it is desirable that the average residence time in the reactor where the aluminum compound is added is from 40 to 600, preferably from 60 and 300 seconds. This can be achieved by carrying out this reaction in a small, vigorously agitated reactor of appropriate capacity.

After the reaction with the aluminum compound optionally a maturing step is carried out at a temperature between 40 and 100°C, for a period between 20 and 180 minutes. The maturing or ageing step can be carried out in two or more maturing vessels and then it is advantageous that the temperature in the second and possibly following maturing vessels is 5 to 20 centigrades lower than in the preceding vessel.

The invention also provides a novel catalyst which is obtainable by the processes outlined above and which catalysts are higher in hydrogenation activity towards glyceride oils and fats and more selective than the catalysts prepared obtainable by the processes known in the prior art.

The present invention provides also a process for the hydrogenation of unsaturated organic compounds, in particular fatty acids and fatty acid derivatives such as, fatty glycerides, fatty nitriles etc. in which a catalyst obtained as described above is used. These hydrogenations are carried out conveniently at increased temperature (80°-300°C) and optionally increased pressure (0.1-6 MPa) with hydrogen.

The hydrogenated products thus obtained, in particular the hydrogenated triglyceride oils, possess a favourable combination of properties such as low tri-saturated content combined with a steep dilatation curve. Also due to the higher activity less catalyst is required than usually.

As a rule the precipitation reactors contain a device for vigorously agitating the liquid and the reactors are of such a dimension with respect to the amounts of liquid pumped in that short average residence times are obtained.

One of the distinguishing features from the earlier process therefore is the shorter residence time in the second reactor, which is appreciably shorter so that the throughput of the installation is increased and/or alternatively the second reactor has a smaller capacity. Another distinguishing feature is the substantially higher agitation of the contents of the second reactor than in the earlier process. After the second reactor, optionally after the maturing vssel the suspended (unreduced) catalyst is separated, usually by filtration, but prior to that a storage tank at a lower temperature and which is mildly stirred is sometimes convenient. Also there is the possibility of dosing the aluminum compound to the suspension in more than one reactor, but the total average residence time in this step should remain within the indicated range.

The preparation of the catalyst can be carried out batchwise (= discontinuously) or continuously (e.g. according to the cascade method).

Nickel compounds which may be used as starting material for the preparation of the catalyst according to the present invention are watersoluble nickel compounds such as nitrate, sulphate, acetate and chloride. The solution fed into the first reactor contains between 10 and 80 grams of nickel per litre, particularly preferred are solutions containing between 25 and 60 g metal per litre. Alkaline precipitation agents which may be used as a starting material for the process of preparation of the catalyst according to the present invention are alkali metal hydroxides, alkali metal carbonates, alkali metal bicarbonates, the corresponding ammonium compounds and mixtures of these compounds. The concentration of the alkaline precipitating agent which is fed in stoechiometric excess into the first reactor is preferably 20 to 300 grams of alkaline material (calculated as anhydrous material) per litre in as far as the solubility permits so, more particularly between 50 and 250 g per litre.

Preferably precipitation of nickel ions with alkaline precipitating agent takes place at a temperature between 20° and 95°C.

Suitable soluble aluminum compounds which can be used in the practice of this invention are e.g. aluminum nitrate, sodium aluminate and alumina, which dissolves at least partly in the nickelhydroxy/carbonate suspension solution which contains an excess alkaline precipitating agent.

The amounts and ratios of nickel, alkaline precipitating agent and aluminum compound added to the reactors depend on the desired composition of the eventual catalyst and can be easily calculated. Preferably the nickel/alumina catalyst satisfies the following combination of features :

1) a nickel/alumina atomic ratio between 2 and 10 ;

2) an average pore size between 4 and 20 nanometers ;

3) an active nickel surface area as determined by hydrogen chemisorption between 90 and 150 $m^2/g$ nickel ;

4) nickel crystallites with an average diameter between 1 and 5 nanometers.

In addition these nickel/alumina catalysts may show improved properties as to catalytic activity as defined below and improved selectivity as evidenced by a reduced content of trisaturated triglycerides.

The catalysts according to the present invention may also contain a water insoluble carrier material which was already present during the preparation or was added thereto later. Suitable carrier materials are e.g. silica containing substances like kieselguhr, silicates as bentonite. According to the present invention, however, preferably no insoluble carrier is used. Nevertheless for special applications the presence of an insoluble carrier can be desirable. If carrier material is used, this material can be added (a) direct as such, (b) as an aqueous suspension, (c) preferably as a suspension in the aqueous solution of a metal salt, or (d) as a suspension in an aqueous solution of the alkaline precipitating agent.

In a preferred embodiment, in which the precipitation of the metal ions is carried out continuously, the amounts of solutions to be fed into the first reactor are dosed by determining, optionally continuously, the alkalinity (= normality) of the discharged liquid. This can also be done by pH determination (pH 7.0-10). The temperature at which the precipitation of the metal(s) takes place can conveniently be controlled by adjusting the temperatures of the solutions fed in. In any of the two reactors, or in the maturing vessel prior to filtration, other compounds, if any, may be added such as carrier material, some alkaline solution and/or possible promotors such as magnesium, copper, zirconium, cobalt, molybdenum, silver possibly other metals or combinations thereof so that their amount in the eventual catalyst does not exceed 10 mole percent of the metal content.

After the soluble aluminum compound has been added the solid components are separated from the mother liquid, washed with water if necessary, e.g. in the presence of a surface active material or organic solvent, e.g. acetone, and subsequently dried by means of spray-drying, freeze-drying and oven-drying. Spray-drying and freeze-drying are preferred because they generally result in better catalytic properties.

Thereafter, if desired, the dry solid material is optionally ground and/or calcined and then activated (or reduced) with hydrogen gas at an increased temperature, which as a rule lies between 300° and 500°C, preferably between 350° and 450° C. The activation can take place at atmospheric or under reduced pressure. The reduced catalyst so obtained is then usually suspended in hydrogenated fatty material, often triglyceride oil.

Example 1

Aqueous solutions of a) the nitrate salt of Ni (0.6 M Ni) and b) $Na_2CO_3$ (10 wt%) were continuously pumped at equal flow rates into a vigorously stirred precipitation reactor during which Ni precipitated forming a Ni hydroxycarbonate. The precipitation took place at a temperature of 20°C. In the precipitation reactor the suspension had an average residence time of 60 sec. The suspension was continuously transferred into a second, vigorously stirred reactor (energy input 77 Watts/litre) in which the average residence time was 60 seconds and the temperature was 20°C. Simultaneously an amount of aluminum ions were dosed into this reactor continuously. The Al/Ni molar ratio was 0.23 on an average. The suspension discharged by the second reactor was continuously fed into a maturing vessel in which the suspension was kept at a temperature of 97°C with an average residence time of 30 min.

Then the suspension was led to a filter where the precipitate was washed with water of 80°C to remove $Na^+$ ions. The washed green filtercake was then dried in a spray dryer at 120°C.

Thereafter the green powder was reduced in a $H_2$ atmosphere for 30 minutes at a temperature of 400°C to give the active catalyst. The catalyst was characterized by the following chemical and physical methods :

1.    The chemical composition expressed as a Al/ Ni (molar ratio) was determined by X-ray fluorescence.
2.    The active nickel surface area (expressed as $m^2/g$ nickel was determined by $H_2$ chemisorption after reduction of the green cake at 400°C.

The results of above determinations are given in Table 1 below.

The catalytic activity and selectivity of the catalyst were determined in the hydrogenation of soybean oil.

Activity and selectivity test

The activity and selectivity of the catalyst were measured by hydrogenating 250 g soybean oil having an iodine value (IV) of 135 to an IV of 80 using 0.01 (w.w)% Ni with 60 litres $H_2$/hour under a pressure of 0.1 MPa. The temperature in the hydrogenation was stepwise increased from 150°C up to 220°C in 60 minutes. The time required for an IV (iodine value) decrease from 135 to 80 is taken as a yardstick for the activity. The activity is expressed in minutes and a high activity corresponds with a hydrogenation time between 45 and 65 minutes.

The percentage of solid fat in the hydrogenated soybean oil at different temperatures (10°C, 20°C, 30°C and 35°C), were taken as a yardstick for the selectivity. These solid fat contents (SFC) are measured according to the AOCS method Cd 16-81 and are expressed as a percentage. Low SFC values for a hydrogenated soybean oil with IV = 80 are indicative for a high selectivity, i.e. low formation of trisaturated glycerides. Moreover, a large difference between the SFC at 10°C and 20°C indicates that the hydrogenated oil has a desirable steep dilatation or melting curve.

The catalyst prepared according to this example exhibited a high activity and selectivity in the hydrogenation of soybean oil (cf. Table 1)

Example 2

Aqueous solutions of a) the nitrate salts of Ni (0.6 M Ni) and b) $Na_2CO_3$ (10%) were continuously pumped at equal flow rates into a vigorously stirred mechanical input precipitation reactor during which the Ni precipitated forming a Ni hydroxycarbonate. The precipitation took place at a temperature of 75°C. In the precipitation reactor the suspension had an average residence time of 60 sec. This suspension was continuously transferred to a second, vigorously stirred reactor in which the average residence time was 60 seconds and the temperature was 96°C. Simultaneously an amount of aluminum ions was dosed into this reactor continuously in the form of a sodium aluminate solution containing 10 wt% of aluminum. The Al/Ni molar ratio was 0.21 on an average. The suspension coming from the second reactor was led continuously to a maturing vessel in which the suspension was kept at a temperature of 97°C with an average residence time of 30 minutes. Then the suspension was led to a filter where the precipitate was washed with water of 80°C to remove $Na^+$ ions. The washed green filtercake was then dried in a spray dryer at 120°C.

Thereafter the green powder was reduced in a $H_2$ atmosphere for 30 minutes at a temperature of 400°C to give the active catalyst. The catalyst was characterized by the following chemical and physical methods :

1.    The chemical composition expressed as a Al/ Ni (molar ratio) was determined by X-ray fluorescence.
2.    The active nickel surface area (expressed as $m^2/g$ nickel was determined by $H_2$ chemisorption after reduction of the green cake at 400°C.

The catalytic activity and selectivity of the catalyst were determined as described above.

The activity and the selectivity obtained from the hydrogenation of soybean oil with the catalyst prepared as described above are given in Table 1.

Example 3

Aqueous solutions of $Ni(NO_3)_2 \cdot 6H_2O$ (0.6 M) and soda (10 wt%) were continuously pumped at equal flow rates into a vigorously stirred precipitation reactor, during which nickel hydroxy carbonate precipitated at a temperature of 56°C. In this precipitation reactor the suspension had an average residence time of 60 seconds. The suspension was continuously led into a second, vigorously stirred reactor in which the average residence time was 60 seconds, the temperature was 65°C and the power input was 55 Watts per litre of solution. Simultaneously an amount of aluminum ions was dosed into this reactor continuously in the form of a sodium aluminate solution (10 wt% Al). The Al/Ni molar ratio was 0.20 on an average. The suspension coming from the second reactor was led into a maturing vessel in which the suspension was kept at a temperature of 97°C with an average residence time of 30 min.

Then the suspension was led to a filter where the precipitate was washed with water of 80°C to remove $Na^+$ ions. The washed green filtercake was then dried in a spray dryer at 120°C.

Thereafter the green powder was reduced in a $H_2$ atmosphere for 30 minutes at a temperature of 400°C to give the active catalyst. The catalyst was characterized by methods described in example 1.

The catalytic activity and selectivity of the catalyst were determined as described above.

The activity and the selectivity obtained from the hydrogenation of soybean oil with the catalyst prepared as described above are given in Table 1.

## Table I

| Example | 1 | 2 | 3 |
|---|---|---|---|
| Al/Ni molar ratio | 0.23 | 0.21 | 0.20 |
| Nickel surface area ($m^2$/g Ni ) | 143 | 127 | 114 |
| Soybean Oil Hydrogenation test | | | |
| Hydrogenation time (in min.) | 48 | 52 | 58 |
| Selectivity expressed as | | | |
| SFC- values: SFC$_{10}$(%) | 38.7 | 38.0 | 39.6 |
| SFC$_{20}$(%) | 16.8 | 15.7 | 17.3 |
| SFC$_{30}$(%) | 1.6 | 1.3 | 1.6 |
| SFC$_{35}$(%) | 0.0 | 0.0 | 0.0 |

**Claims**

1. A process for preparing a nickel/alumina catalyst in which an insoluble nickel compound is precipitated from an aqueous solution of a nickel salt with an excess alkaline precipitating agent, which precipitate is subsequently reacted with a soluble aluminum compound, collected, dried and reduced, characterized in that after the nickel compound has been precipitated, the aluminum compound is reacted with the precipitate in a vigorously agitated reactor using an energy input of 5 to 2000, preferably 10 to 100 Watts per litre of liquid.

2. A process according to claim 1 characterized in that the temperature during the reaction of the precipitate with the aluminum compound is between 10 and 100, preferably between 20 and 80°C.

3. A process according to claim 1 or 2 characterized in that the soluble aluminum compound is added to the suspension within 15 minutes after precipitation of the nickel ions and that a maturing step starts within 15 minutes after reaction with the aluminum compound.

4. A process according to claim 1, 2 or 3 characterized in that the soluble aluminum compound is added in an amount of 0.1 to 0.5, preferably between 0.1 and 0.25 mole aluminum per mole of nickel.

5. A process according to any of the preceding claims characterized in that the average residence time in the reactor where the aluminum compound is added is from 40 to 600, preferably from 60 and 300 seconds.

6. A process according to any of the preceding claims characterized in that maturing is carried out at a temperature between 40 and 100°C, for a period between 20 and 180 minutes.

7. A process according to any of the preceding claims characterized in that two or more maturing vessels are used, the temperature in the second and possibly following vessels being 5 to 20 degrees centigrade lower than in the preceding vessel.

8. A process according to any of the preceding claims characterized in that the energy input in the first precipitation reactor is between 5 and 2000, preferably between 10 and 100 Watts per litre.

9. A catalyst obtainable according to the process of any of the preceding claims.

10. A process for the hydrogenation of unsaturated organic compounds, characterized in that a catalyst obtained according to the process of any of claims 1-8 is used.

**Patentansprüche**

1. Verfahren zur Herstellung eines Nickel/Aluminiumoxid-Katalysators, bei dem eine unlösliche Nickelverbindung aus einer wäßrigen Lösung eines Nickelsalzes mit einem überschüssigen alkalischen Ausfällungsmittel ausgefällt wird, dieser Niederschlag anschließend mit einer löslichen Aluminiumverbindung umgesetzt, gesammelt, getrocknet und reduziert wird, dadurch gekennzeichnet, daß nach der Ausfällung der Nickelverbindung die Aluminiumverbindung mit dem Niederschlag in einem stark gerührten Reaktor unter Einsatz einer Energiezufuhr von 5 bis 2000, vorzugsweise 10 bis 100 Watt/l Flüssigkeit umgesetzt wird.

2. Verfahren gemäß Anspruch 1, dadurch gekennzeichnet, daß die Temperatur während der Reaktion des Niederschlages mit der Aluminiumverbindung zwischen 10 und 100, vorzugsweise zwischen 20 und 80°C liegt.

3. Verfahren gemäß Anspruch 1 oder 2, dadurch gekennzeichnet, daß die lösliche Aluminiumverbindung der Suspension innerhalb von 15 Minuten nach Ausfällung der Nickelionen zugefügt wird und die Reifungsstufe innerhalb von 15 Minuten nach Reaktion mit der Aluminiumverbindung beginnt.

4. Verfahren gemäß Anspruch 1, 2 oder 3, dadurch gekennzeichnet, daß die lösliche Aluminiumverbindung in einer Menge von 0,1 bis 0,5, vorzugsweise zwischen 0,1 und 0,25 Mol Aluminium pro Mol Nickel zugefügt wird.

5. Verfahren gemäß irgendeinem der vorhergehenden Ansprüche, dadurch gekennzeichnet, daß die durchschnittliche Verweilzeit in dem Reaktor, dem die Aluminiumverbindung zugefügt wird, 40 bis 600, vorzugsweise 60 bis 300 Sekunden beträgt.

6. Verfahren nach irgendeinem der vorhergehenden Ansprüche, dadurch gekennzeichnet, daß die Reifung bei einer Temperatur zwischen 40 und 100°C für eine Dauer zwischen 20 und 180 Minuten durchgeführt wird.

7. Verfahren gemäß irgendeinem der vorhergehenden Ansprüche, dadurch gekennzeichnet, daß zwei oder mehrere Reifungsgefäße verwendet werden, wobei die Temperatur in dem zweiten und möglicherweise folgenden Gefäßen 5 bis 20°C niedriger als im vorhergehenden Gefäß ist.

8. Verfahren nach irgendeinem der vorhergehenden Ansprüche, dadurch gekennzeichnet, daß die Energiezufuhr im ersten Ausfällungsreaktor zwischen 5 und 2000, vorzugsweise zwischen 10 und 100 Watt/l beträgt.

9. Katalysator, erhältlich gemäß dem Verfahren nach irgendeinem der vorhergehenden Ansprüche.

10. Verfahren zur Hydrierung ungesättigter organischer Verbindungen, dadurch gekennzeichnet, daß ein Katalysator verwendet wird, der gemäß dem Verfahren nach irgendeinem der Ansprüche 1 bis 8 erhalten ist.

**Revendications**

1. Procédé de préparation d'un catalyseur nickel/ alumine selon lequel on précipite un composé insoluble de nickel à partir d'une solution aqueuse d'un sel de nickel avec un excès d'un agent alcalin de précipitation, puis on fait réagir le précipité avec un composé soluble d'aluminium, on collecte, on sèche et on réduit, caractérisé en ce qu'après la précipitation du composé de nickel, on fait réagir le composé d'aluminium avec le précipité dans un réacteur vigoureusement agité en utilisant un apport d'énergie de 5 à 2000, de préférence de 10 à 100 watts par litre de liquide.

2. Procédé selon la revendication 1, caractérisé en ce que la température pendant la réaction du précipité avec le composé d'aluminium est comprise entre 10 et 100, de préférence entre 20 et 80°C.

3. Procédé selon la revendication 1 ou 2, caractérisé en ce qu'on ajoute le composé soluble d'aluminium à la suspension dans les 15 minutes après précipitation des ions nickel et en ce qu'un stade de maturation débute dans les 15 minutes après la réaction avec le composé d'aluminium.

4. Procédé selon la revendication 1, 2 ou 3, caractérisé en ce qu'on ajoute le composé soluble d'aluminium à raison de 0,1 à 0,5, de préférence de 0,1 à 0,25 mole d'aluminium par mole de nickel.

5. Procédé selon l'une quelconque des revendications précédentes, caractérisé en ce que la durée moyenne de séjour dans le réacteur dans lequel on introduit le composé d'aluminium est de 40 à 600, de préférence de 60 à 300 secondes.

6. Procédé selon l'une quelconque des revendications précédentes, caractérisé en ce qu'on effectue la maturation à une température comprise entre 40 et 100°C pendant une durée de 20 à 180 minutes.

7. Procédé selon l'une quelconque des revendications précédentes, caractérisé en ce qu'on utilise deux ou plusieurs récipients de maturation, la température dans le second récipient et, éventuellement, dans les récipients suivants étant inférieure de 5 à 20°C à la température dans le récipient précédent.

8. Procédé selon l'une quelconque des revendications précédentes, caractérisé en ce que l'apport d'énergie dans le premier réacteur de précipitation est de 5 à 2000, de préférence de 10 à 100 watts par litre.

9. Catalyseur qu'on obtient par le procédé selon l'une quelconque des revendications précédentes.

10. Procédé d'hydrogénation de composés organiques insaturés, caractérisé en ce qu'on utilise un catalyseur obtenu par le procédé selon l'une quelconque des revendications 1 à 8.